# EUROPEAN PATENT APPLICATION

(11) **EP 4 679 582 A1**
(43) Date of publication of application: **14.01.2026**
(21) Application number: 24767193.6
(22) Date of filing: 06.03.2024
(51) Int. Cl.: H01M 50/15, H01G 11/10, H01G 11/78, H01M 50/103, H01M 50/105

(54) **POWER STORAGE DEVICE, COVER MEMBER, FIXING JIG, METHOD FOR PRODUCING POWER STORAGE DEVICE, AND TRANSPORT JIG**

(30) Priority: 06.03.2023 JP 2023034133
(71) Applicant: Dai Nippon Printing Co., Ltd., Tokyo 162-8001 (JP)
(72) Inventor: URIU, Toshibumi, Tokyo 162-8001 (JP); MIYASHIRO, Kae, Tokyo 162-8001 (JP); KANAZAWA, Sayako, Tokyo 162-8001 (JP); SASAKI, Miho, Tokyo 162-8001 (JP); ARAI, Yuta, Tokyo 162-8001 (JP); HENMI, Takashi, Tokyo 162-8001 (JP)
(74) Representative: Müller-Boré & Partner Patentanwälte PartG mbB
(86) International application number: PCT/JP2024/008620
(87) International publication number: WO 2024/185827

(57) **Abstract**

This power storage device is provided with an electrode body and an outer package in which the electrode body is sealed. The outer package comprises an outer package film which enfolds the electrode body in such a manner that an opening is formed, and a cover member which is disposed at the position of the opening. The cover member has a first surface that faces the electrode body, a second surface that is on the reverse side of the first surface, and a projection that protrudes from the second surface.

## Description

### Technical Field

The present invention relates to an electrical storage device, a lid, a fixing jig, a method for manufacturing an electrical storage device, and a transport jig.

### Background Art

PTL 1 discloses an example of an electrical storage device. This electrical storage device includes an electrode assembly and an outer packaging that seals the electrode assembly. The outer packaging includes an outer package film that wraps the electrode assembly to form opening parts and lids that are disposed at the opening parts. The outer package film and the lids are bonded.

### Citation List

### Patent Literature

PTL 1: Japanese Patent Laid-open Publication No. 2022-123686

### Summary of Invention

### Technical Problem

In a process of manufacturing the electrical storage device, an intermediate body in which lids are disposed at both end parts of the electrode assembly is manufactured. The intermediate body is moved to the workplace of the next manufacturing process. There is thus a concern that the positions of the lids with respect to the electrode assembly may deviate with the movement of the intermediate body.

An object of the present invention is to provide an electrical storage device with lids at accurate positions with respect to an electrode assembly, the lid used in the electrical storage device, a fixing jig and a transport jig used to manufacture or use the electrical storage device, and a method for manufacturing the electrical storage device. Solution to Problem

An electrical storage device according to a first aspect of the present invention includes: an electrode assembly; and an outer packaging that seals the electrode assembly, in which the outer packaging includes an outer package film that wraps the electrode assembly to form an opening part, and a lid that is disposed at the opening part, and the lid includes a first surface that faces the electrode assembly, a second surface on a side opposite to the first surface, and at least either protrusion that protrudes from the second surface or a recessed portion that is recessed from the second surface toward the first surface.

An electrical storage device according to a second aspect of the present invention is the electrical storage device according to the first aspect, in which the lid includes a body that includes the first surface and the second surface, and the protrusion includes a fixing member that is bonded to the body.

An electrical storage device according to a third aspect of the present invention is the electrical storage device according to the first aspect, in which the lid includes a body that includes the first surface and the second surface, the body includes a thick portion that protrudes from the second surface, and holes are formed in the thick portion and the body.

An electrical storage device according to a fourth aspect of the present invention is the electrical storage device according to the first aspect, in which the protrusion includes a fracture portion.

An electrical storage device according to a fifth aspect of the present invention is a fixing jig that is used when the electrical storage device according to any one of the first to fourth aspects is manufactured or used, the fixing jig including a lid fixing portion that is fixed to at least one of the protrusion and the recessed portion.

A lid according to a sixth aspect of the present invention is a lid that is used for the electrical storage device according to any one of the first to fourth aspects, the lid including a first surface; a second surface on a side opposite to the first surface; and at least one of a protrusion that protrudes from the second surface and a recessed portion that is recessed from the second surface toward the first surface.

A method for manufacturing an electrical storage device according to a seventh aspect of the present invention is a method for manufacturing an electrical storage device including an electrode assembly, and an outer packaging that seals the electrode assembly, the outer packaging including an outer package film that wraps the electrode assembly to form an opening part, and a lid that closes the opening part, the lid including a first surface that faces the electrode assembly, a second surface on a side opposite to the first surface, and at least one of a protrusion that protrudes from the second surface and a recessed portion that is recessed from the second surface toward the first surface, the method for manufacturing the electrical storage device including: fixing a position of the lid with respect to the electrode assembly by fixing a jig to at least one of the protrusion and the recessed portion of the lid disposed on a lateral side of the electrode assembly.

A transport jig according to an eighth aspect of the present invention is a transport jig for an electrode assembly including: at least a pair of plates that sandwiches the electrode assembly; and a coupling portion that couples the pair of plates.

A transport jig according to a ninth aspect of the present invention further includes: a handle that is attached to at least one of the pair of plates, in the transport jig according to the eighth aspect.

### Advantageous Effects of Invention

The electrical storage device, the lid, the fixing jig, the method for manufacturing an electrical storage device, and a transport jig according to the present invention can contribute to enhancement of accuracy of the positions of lids with respect to an electrode assembly.

### Brief Description of Drawings

[Fig. 1A] Fig. 1A is a plan view schematically illustrating an electrical storage device of an embodiment.
[Fig. 1B] Fig. 1B is a diagram related to a method for measuring sealing strength of a second seal portion of the electrical storage device in Fig. 1A.
[Fig. 2] Fig. 2 is a sectional view illustrating an example of a layer configuration of an outer package film included in the electrical storage device in Fig. 1A.
[Fig. 3] Fig. 3 is a perspective view of a lid included in the electrical storage device in Fig. 1A.
[Fig. 4] Fig. 4 is a diagram of a state in which the outer package film included in the electrical storage device in Fig. 1A is unfolded.
[Fig. 5] Fig. 5 is a sectional view of the lid in Fig. 3.
[Fig. 6] Fig. 6 is a perspective view of a state in which an intermediate body is placed on a fixing jig used in a procedure of manufacturing the electrical storage device in Fig. 1A.
[Fig. 7] Fig. 7 is a flowchart illustrating an example of a process of manufacturing the electrical storage device in Fig. 1A.
[Fig. 8] Fig. 8 is a diagram related to a second process in Fig. 7.
[Fig. 9] Fig. 9 is a diagram related to a third process in Fig. 7.
[Fig. 10] Fig. 10 is another diagram related to the third process in Fig. 7.
[Fig. 11] Fig. 11 is yet another diagram related to the third process in Fig. 7.
[Fig. 12] Fig. 12 is a diagram showing an example of a relationship between strain and a stress acting on an outer package film in the third process in Fig. 7.
[Fig. 13] Fig. 13 is a diagram related to a fourth process in Fig. 7.
[Fig. 14] Fig. 14 is a diagram related to a fifth process in Fig. 7.
[Fig. 15] Fig. 15 is a flowchart illustrating an example of the fifth process in Fig. 7.
[Fig. 16] Fig. 16 is another diagram related to the fifth process in Fig. 7.
[Fig. 17] Fig. 17 is a diagram related to a sixth process in Fig. 7.
[Fig. 18] Fig. 18 is a diagram related to an eighth process and a ninth process in Fig. 7.
[Fig. 19] Fig. 19 is a side view of a state in which a transport jig is attached to the electrical storage device in Fig. 1A.
[Fig. 20] Fig. 20 is a plan view of Fig. 19.
[Fig. 21] Fig. 21 is a perspective view of a lid included in an electrical storage device in a modification.
[Fig. 22] Fig. 22 is a perspective view of a lid included in an electrical storage device in another modification.
[Fig. 23] Fig. 23 is a side view of an electrical storage device in yet another modification.
[Fig. 24] Fig. 24 is a perspective view of a fixing jig that fixes the lid in Fig. 22.
[Fig. 25] Fig. 25 is a plan view of an electrical storage device in a modification.
[Fig. 26] Fig. 26 is a diagram related to a process in a modification of the third process in Fig. 7.
[Fig. 27] Fig. 27 is a diagram related to a process in a modification of the fifth process in Fig. 7.
[Fig. 28] Fig. 28 is a diagram related to a process in another modification of the fifth process in Fig. 7 and illustrating a state where a sealing bar is at an initial position.
[Fig. 29] Fig. 29 is a diagram illustrating a state where the sealing bar in Fig. 28 is at a reference position.
[Fig. 30] Fig. 30 is a diagram related to a process of yet another modification of the fifth process in Fig. 7.
[Fig. 31] Fig. 31 is a flowchart illustrating a modification of the process of manufacturing the electrical storage device in Fig. 1A.
[Fig. 32] Fig. 32 is a diagram related to a thirty second process in Fig. 31.

### Description of Embodiments

Hereinafter, an electrical storage device according to an embodiment of the present invention will be described with reference to the drawings. In this specification, a numerical range indicated by the term "A to B" means "A or more" and "B or less". For example, the expression of "2 to 15 mm" means 2 mm or more and 15 mm or less.

### [1. Embodiments]

### <1-1. Configuration of electrical storage device>

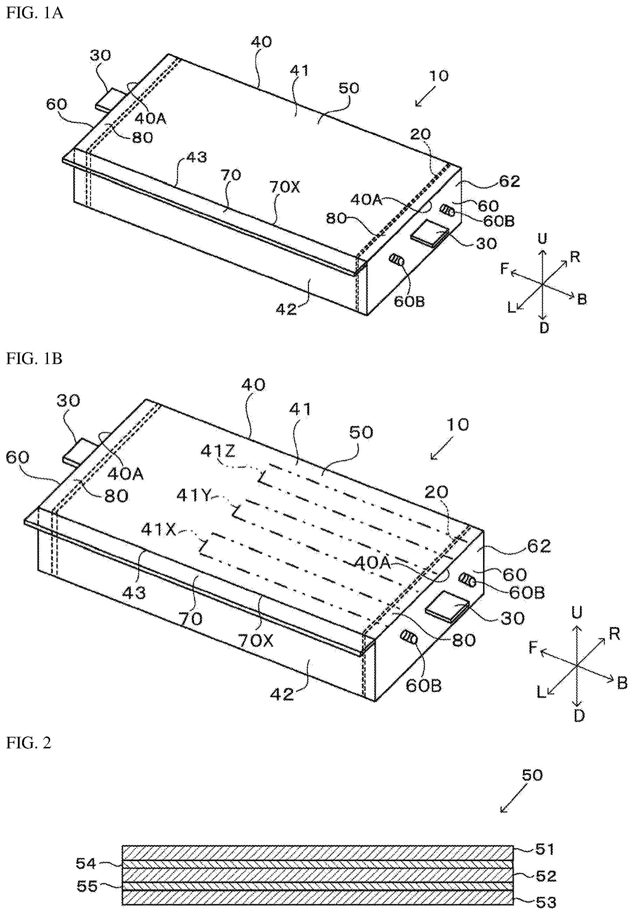

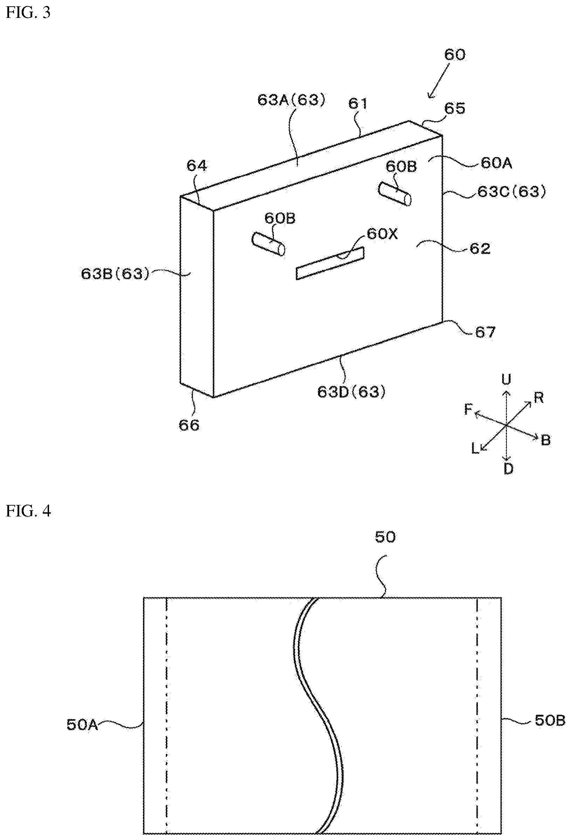

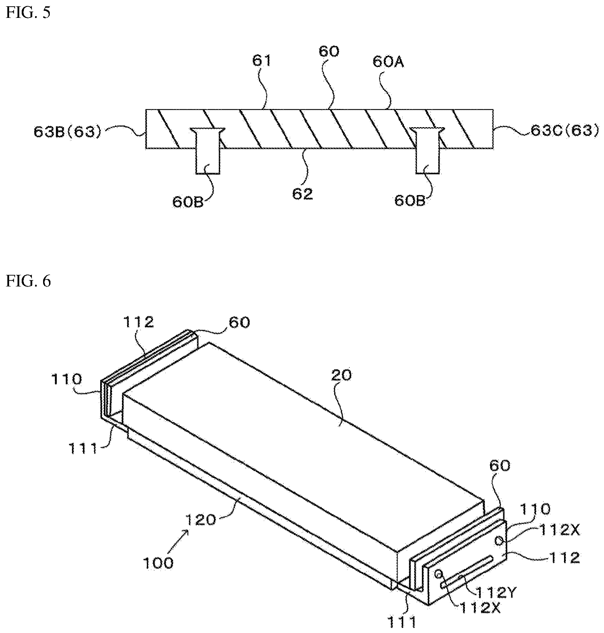

Fig. 1A is a plan view schematically illustrating an electrical storage device 10 of a first embodiment. Fig. 1B is a diagram related to a method for measuring sealing strength of a second seal portion 80 of the electrical storage device 10. Fig. 2 is a sectional view illustrating a layer configuration of an outer package film 50 included in the electrical storage device 10 in Fig. 1A. Fig. 3 is a perspective view of a lid 60 included in the electrical storage device 10 in Fig. 1A. Fig. 4 is a view of a state in which the outer package film 50 included in the electrical storage device 10 in Fig. 1A is unfolded. Fig. 5 is a sectional view of the lid 60 in Fig. 3. Fig. 6 is a perspective view in a state where an intermediate body is placed on a fixing jig 100 used in a procedure of manufacturing the electrical storage device 10. Note that in Fig. 1A, the direction along the arrow UD indicates a thickness direction of the electrical storage device 10, the direction along the arrow LR indicates a width direction of the electrical storage device 10, and the direction along the arrow FB indicates a depth direction of the electrical storage device 10. The directions indicated by each of arrows UDLRFB will also be the same in the subsequent drawings.

The electrical storage device 10 includes an electrode assembly 20, electrode terminals 30, and an outer packaging 40. The electrode assembly 20 includes, for example, electrodes (positive electrode and negative electrode) forming an electrical storage member, such as a lithium ion battery, a capacitor, an all-solid-state battery, a semi-solid-state battery, a pseudo-solid-state battery, a polymer battery, an all-polymer battery, a lead storage battery, a nickel-metal hydride storage battery, a nickel-cadmium storage battery, a nickel-iron storage battery, a nickel-zinc storage battery, a silver oxide-zinc storage battery, a metal-air battery, a polyvalent cation battery, or a capacitor, and a separator. In the present embodiment, the shape of the electrode assembly 20 is substantially a cuboid. Note that the "substantially cuboid" includes a perfect cuboid and also a solid that can be seen as a cuboid by modifying the shape of a part of the outer surface thereof, for example. The shape of the electrode assembly 20 may be, for example, a cylinder or a polygonal column.

In the present embodiment, the electrical storage device 10 includes two electrode terminals 30. The electrode terminals 30 are metal terminals for use in input and output of electrical power in the electrode assembly 20. One end part of each electrode terminal 30 is electrically connected to an electrode (a positive electrode or a negative electrode) included in the electrode assembly 20. The other end part of each electrode terminal 30 protrudes outward from an end edge of the outer packaging 40, for example. Note that the electrode terminal 30 is only required to enable input and output of electrical power in the electrode assembly 20, and is not required to protrude from the outer packaging 40, for example. In a case where lids 60 described later are made from, for example, metal, the lids 60 may also function as the electrode terminal 30, and in this case, the lids 60 having a function as an electrode terminal may, but are not required to, protrude from the outer packaging 40.

The metal material for forming the electrode terminal 30 is, for example, aluminum, nickel, copper or the like. For example, in a case where the electrode assembly 20 is a lithium ion battery, the electrode terminal 30 connected to the positive electrode is typically made from aluminum or the like, and the electrode terminal 30 connected to the negative electrode is typically made from copper, nickel or the like. Note that the outermost layer of the electrode assembly 20 is not necessarily an electrode, and may be, for example, a protective tape or a separator.

The outer packaging 40 seals the electrode assembly 20. The outer packaging 40 includes an outer package film 50 and the lids 60. The outer package film 50 wraps the electrode assembly 20 to have opening parts 40A. In the present embodiment, the outer package film 50 is wound around the electrode assembly 20 to have the opening parts 40A. The lids 60 are disposed at the opening parts 40A. Note that the electrode assembly 20 may be housed inside the outer package film 50 configured into a tubular shape such that the opening parts 40A are formed, and the opening parts 40A may be closed by the lids 60.

It is preferable that adhesive films (not illustrated) be bonded to the electrode terminals 30 from the viewpoint of suitable adhesion to the lids 60. The adhesive films can be arbitrarily selected as long as the films can cause the electrode terminals 30 formed of metal to adhere to the lids 60 formed of a resin. For the adhesive films, for example, a polyolefin-based resin such as a polyethylene-based resin or a polypropylene-based resin, a cyclic polyolefin-based resin, or an acid-modified polyolefin-based resin obtained by graft-modifying a polyolefin-based resin with an acid such as maleic anhydride can be used. The adhesive films can be films having a single layer or two or more layers of any of the above-mentioned resins. In the present embodiment, the adhesive films are bonded to substantially the entire parts of the electrode terminals 30 covered with the lids 60.

For example, there is a method in which a housing portion (recess) for housing the electrode assembly 20 is formed in the outer package film 50 through cold molding. However, it is not always easy to form a deep housing portion by such a method. If an attempt is made to form a deep (for example, 15 mm in terms of molding depth) accommodating portion (recess) by cold molding, pinholes or cracks are generated in the outer package film 50, leading to a rise in possibility that battery performance is degraded. On the other hand, since the outer packaging 40 seals the electrode assembly 20 by winding the outer package film 50 around the electrode assembly 20, the electrode assembly 20 can be easily sealed regardless of the thickness of the electrode assembly 20. For reducing a dead space between the electrode assembly 20 and the outer package film 50 in order to improve the volume energy density of the electrical storage device 10, it is preferable that the outer package film 50 be wound in a state of being in contact with the outer surface of the electrode assembly 20. In an all-solid-state battery, it is necessary to eliminate the space between the electrode assembly 20 and the outer package film 50 from the viewpoint that it is necessary to uniformly apply a high pressure from the outer surface of the battery for exhibiting battery performance, and therefore, the state where the outer package film 50 is in contact with and is wound around the outer surface of the electrode assembly 20 is preferable.

As illustrated in Fig. 2, the outer package film 50 is, for example, a laminate (laminate film) including a base material layer 51, a barrier layer 52, and a heat-sealable resin layer 53 in the stated order. Note that the outer package film 50 is not required to include all these layers, and may be free of, for example, the barrier layer 52. In other words, the outer package film 50 is only required to be made from a material that is flexible and easy to bend, and the outer package film 50 may be made from, for example, a resin film. Note that the outer package film 50 is preferably heat-sealable. In the outer package film 50, the innermost layer and the outermost layer may be heat-sealable resin layers 53. In this case, the outer package film 50 may wrap the electrode assembly 20 and the lids 60 by the outermost layer and the innermost layer being bonded to each other.

The base material layer 51 included in the outer package film 50 is a layer for imparting heat resistance to the outer package film 50 to suppress generation of pinholes which may occur during processing or distribution. The base material layer 51 includes, for example, at least one of a stretched polyester resin layer and a stretched polyamide resin layer. For example, by the base material layer 51 including at least one of a stretched polyester resin layer and a stretched polyamide resin layer, the barrier layer 52 can be protected during processing of the outer package film 50 to suppress breakage of the outer package film 50. From the viewpoint of increasing the tensile elongation of the outer package film 50, the stretched polyester resin layer is preferably a biaxially stretched polyester resin layer, and the stretched polyamide resin layer is preferably a biaxially stretched polyamide resin layer. Furthermore, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. Note that the base material layer 51 may include both a stretched polyester resin layer and a stretched polyamide resin layer. From the viewpoint of film strength, the thickness of the base material layer 51 is, for example, preferably 5 µm to 300 µm, more preferably 5 µm to 150 µm.

The barrier layer 52 is a layer which suppresses at least ingress of moisture. The barrier layer 52 is joined to, for example, the base material layer 51 with an adhesive layer 54 interposed therebetween. Examples of the barrier layer 52 include metal foils, deposited films and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 52 include resin films provided with at least one of these deposited films and resin layers. A plurality of barrier layers 52 may be provided. Preferably, the barrier layer 52 contains a layer formed of a metal material. Specific examples of the metal material forming the barrier layer 52 include aluminum alloys, stainless steel, titanium steel and steel sheets, and in a case where the metal material is used as a metal foil, it is preferable that the metal material includes at least one of an aluminum alloy foil and a stainless steel foil.

In the barrier layer 52, the layer formed of the metal material described above may contain a metal recycled material. Examples of the metal recycled material include recycled materials of an aluminum alloy, stainless steel, titanium steel, or a steel plate. These recycled materials can be each obtained by a known method. The recycled material of the aluminum alloy can be obtained by, for example, a manufacturing method described in International Publication No. WO 2022/092231. The barrier layer 52 may be formed only of a recycled material, or may be formed of a mixed material of a recycled material and a virgin material. Note that the metal recycled material is a metal material obtained by, for example, collecting, isolating and purifying various products used in a so-called commercial market, wastes from manufacturing processes, and the like, such that the material can be reused. The virgin material from a metal material is a new metal material obtained by refining a metal natural resource (raw material), which is not a recycled material.

The aluminum alloy foil is more preferably a soft aluminum alloy foil formed of, for example, an annealed aluminum alloy from the viewpoint of improving the moldability or followability of the outer package film 50, and is preferably an aluminum alloy foil containing iron from the viewpoint of further improving the moldability or the followability. In the aluminum alloy foil containing iron (100 mass%), the content of iron is preferably 0.1 mass% to 9.0 mass%, more preferably 0.5 mass% to 2.0 mass%. By the content of iron being 0.1 mass% or more, it is possible to obtain the outer package film 50 having more excellent moldability. By the content of iron being 9.0 mass% or less, it is possible to obtain the outer package film 50 having more excellent flexibility. Examples of the soft aluminum alloy foil include aluminum alloy foils having a composition specified in JIS H4160: 1994 A8021H-O, JIS H4160: 1994 A8079H-O, JIS H4000: 2014 A8021P-O, or JIS H4000: 2014 A8079P-O. If necessary, silicon, magnesium, copper, manganese or the like may be added. Softening can be performed by annealing or the like. From the viewpoint of improving mechanical strength of the outer package film 50, the aluminum alloy foil is more preferably a hard aluminum alloy foil made of, for example, a work-hardened aluminum alloy. Examples of the hard aluminum alloy foil include aluminum alloy foils having a composition specified in JIS H4160: 1994 A8021H-H18, JIS H4160: 1994 A8079H-H18, JIS H4000: 2014 A8021P-H14, or JIS H4000: 2014 A8079P-H14.

Examples of the stainless steel foil include austenitic stainless steel foils, ferritic stainless steel foils, austenitic/ferritic stainless steel foils, martensitic stainless steel foils, and precipitation-hardened stainless steel foils. From the viewpoint of providing the outer package film 50 having further excellent moldability, it is preferable that the stainless steel foil is formed of austenitic stainless steel.

Specific examples of the austenitic stainless steel constituting the stainless steel foil include SUS304, SUS301, and SUS316L, and among these, SUS304 is especially preferable.

In a case where the barrier layer 52 is a metal foil, it is only necessary for the barrier layer 52 to exhibit a function as a barrier layer suppressing at least ingress of moisture, and the barrier layer 52 has a thickness of, for example, about 9 µm to 200 µm. The thickness of the barrier layer 52 is preferably about 85 µm or less, more preferably about 50 µm or less, still more preferably about 40 µm or less, particularly preferably about 35 µm or less. The thickness of the barrier layer 52 is preferably about 10 µm or more, more preferably about 20 µm or more, still more preferably about 25 µm or more. The thickness of the barrier layer 52 is preferably in the range of about 10 µm to 85 µm, about 10 µm to 50 µm, about 10 µm to 40 µm, about 10 µm to 35 µm, about 20 µm to 85 µm, about 20 µm to 50 µm, about 20 µm to 40 µm, about 20 µm to 35 µm, about 25 µm to 85 µm, about 25 µm to 50 µm, about 25 µm to 40 µm, or about 25 µm to 35 µm. In a case where the barrier layer 52 is formed of an aluminum alloy foil, the thickness thereof is especially preferably in above-described range. From the viewpoint of imparting high moldability and high rigidity to the outer package film 50, the thickness of the barrier layer 52 is preferably about 35 µm or more, more preferably about 45 µm or more, still more preferably about 50 µm or more, still more preferably about 55 µm or more, and preferably about 200 µm or less, more preferably about 85 µm or less, still more preferably about 75 µm or less, still more preferably about 70 µm or less, and is preferably in the range of about 35 µm to 200 µm, about 35 µm to 85 µm, about 35 µm to 75 µm, about 35 µm to 70 µm, about 45 µm to 200 µm, about 45 µm to 85 µm, about 45 µm to 75 µm, about 45 µm to 70 µm, about 50 µm to 200 µm, about 50 µm to 85 µm, about 50 µm to 75 µm, about 50 µm to 70 µm, about 55 µm to 200 µm, about 55 µm to 85 µm, about 55 µm to 75 µm, or about 55 µm to 70 µm. By the outer package film 50 having high moldability, deep drawing molding can be facilitated, which contributes to an increase in capacity of the electrical storage device. Since rigidity of the outer package film 50 is enhanced, the outer package film 50 can be suitably wound around the electrode assembly 20 in a case where the outer package film 50 is wound around the electrode assembly 20. Although the weight of the electrical storage device increases when the capacity of the electrical storage device is increased, enhancement of the rigidity of the outer package film 50 can contribute to high sealing performance of the electrical storage device. In particular, in a case where the barrier layer 52 is made of a stainless steel foil, the thickness of the stainless steel foil is preferably about 60 µm or less, more preferably about 50 µm or less, still more preferably about 40 µm or less, even more preferably about 30 µm or less, particularly preferably about 25 µm or less. The thickness of the stainless steel foil is preferably about 10 µm or more, more preferably about 15 µm or more. The thickness of the stainless steel foil is preferably in the range of about 10 µm to 60 µm, about 10 µm to 50 µm, about 10 µm to 40 µm, about 10 µm to 30 µm, about 10 µm to 25 µm, about 15 µm to 60 µm, about 15 µm to 50 µm, about 15 µm to 40 µm, about 15 µm to 30 µm, or about 15 µm to 25 µm.

In a case where the barrier layer 52 is an aluminum foil, it is preferable that a corrosion-resistant film be provided at least on a surface on a side opposite to the base material layer 51 for prevention of dissolution, corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. In a case where the barrier layer 52 is provided with the corrosion-resistant film, the barrier layer 52 is regarded as including the corrosion-resistant film.

The corrosion-resistant film exhibits the effects of preventing delamination between the barrier layer 52 (for example, an aluminum alloy foil) and the base material layer 51 during molding or winding of the outer package film 50, preventing dissolution and corrosion of the surface of the barrier layer 52, particularly dissolution and corrosion of aluminum oxide present on the surface of the barrier layer 52 in a case where the barrier layer 52 is an aluminum alloy foil, by hydrogen fluoride generated by reaction of an electrolyte with moisture, improving the bondability (wettability) of the surface of the barrier layer 52, preventing delamination between the base material layer 51 and the barrier layer 52 during heat-sealing, and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 included in the outer package film 50 is a layer that imparts a sealing property to the outer package film 50 by heat sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 µm to 300 µm, more preferably 40 µm to 150 µm.

The outer package film 50 preferably includes one or more layers having a buffer function (hereinafter, referred to as "buffer layers") outside the heat-sealable resin layer 53, more preferably outside the barrier layer 52. The buffer layer may be laminated outside the base material layer 51, and the base material layer 51 may also function as a buffer layer. In a case where the outer package film 50 includes a plurality of buffer layers, the plurality of buffer layers may lie side-by-side, or may be laminated with the base material layer 51, the barrier layer 52, or the like interposed between the buffer layers.

A material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicon rubber. The rubber hardness is preferably about 20 to 90. The material for forming a nonwoven fabric is preferably a material having excellent heat resistance. In a case where the buffer layer is made from a nonwoven fabric, the lower limit of the thickness of the buffer layer is preferably 100 µm, more preferably 200 µm, or still more preferably 1,000 µm. In a case where the buffer layer is made from a nonwoven fabric, the upper limit of the thickness of the buffer layer is preferably 5,000 µm, or more preferably 3,000 µm. The thickness of the buffer layer is preferably in the range of 100 µm to 5,000 µm, 100 µm to 3,000 µm, 200 µm to 5,000 µm, 200 µm to 3,000 µm, 1,000 µm to 5,000 µm, or 1,000 µm to 3,000 µm. The thickness of the buffer layer is most preferably in the range of 1,000 µm to 3,000 µm among these.

In a case where the buffer layer is made from rubber, the lower limit of the thickness of the buffer layer is preferably 0.5 mm. In a case where the buffer layer is made from rubber, the upper limit of the thickness of the buffer layer is preferably 10 mm, more preferably 5 mm, still more preferably 2 mm. In a case where the buffer layer is made from rubber, the thickness of the buffer layer is preferably in the range of 0.5 mm to 10 mm, 0.5 mm to 5 mm, or 0.5 mm to 2 mm.

In a case where the outer package film 50 includes a buffer layer, the buffer layer functions as a cushion, so that breakage of the outer package film 50 due to the impact of falling of the electrical storage device 10 or handling during manufacturing of the electrical storage device 10 is suppressed.

The lid 60 illustrated in Fig. 3 has a cuboid shape, for example, and is a resin molded article formed from a resin material, for example. Note that the lid 60 may be a metal molded article. Materials constituting the lid 60 may include at least two or more kinds of materials from among a metal oxide, a carbon material, and a rubber material. The materials may include a metal oxide, a carbon material, and a rubber material.

The lid 60 is preferably formed by including a resin material. Here, "configured to contain a resin material" means that the content of the resin material is 50 mass% or more, preferably 80 mass% or more, more preferably 90 mass% or more, and still more preferably 95 mass% or more when the total of materials constituting the lid 60 is defined as 100 mass%. In other words, the materials constituting the lid 60 can contain materials other than the resin material in addition to the resin material.

Specific examples of the resin include resins such as polyester, polyolefin, polyamide, an epoxy resin, an acrylic resin, a fluororesin, polyurethane, a silicone resin, and a phenol resin, and thermoplastic resins such as modified products of these resins. The resin material may be a mixture of these resins, may be a copolymer thereof, or a modified product of the copolymer. Among them, the resin material is preferably a heat-sealable resin such as polyester or polyolefin, and more preferably polyolefin. In a case where the resin material is a resin, the lid 60 may be molded by any molding method.

Specific examples of the polyester include polyethylene terephthalate, polybutylene terephthalate, polyethylene naphthalate, polybutylene naphthalate, polyethylene isophthalate and copolyester. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). Among these, the resin material is preferably polybutylene terephthalate from the viewpoint of enhancing heat resistance and pressure resistance.

Specific examples of polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (for example, block copolymers of propylene and ethylene) and random copolymers of polypropylene (for example, random copolymers of propylene and ethylene); propylene-α-olefin copolymers; and terpolymers of ethylene-butene-propylene. The polyolefin resin in the case of a copolymer may be a block copolymer or a random copolymer. Among them, the resin material is preferably polypropylene because it is excellent in heat-sealability and electrolytic solution resistance.

The resin as the resin material may contain a filler as necessary. Specific examples of the filler include glass beads, graphite, glass fiber, and carbon fiber. By the resin as the resin material containing the filler, deformation resistance of the lid 60 against a temperature change can be improved.

The melt mass flow rate of the resin material contained in the material constituting the lid 60 is preferably in the range of 1 g/10 min to 80 g/10 min, and more preferably in the range of 5 g/10 min to 60 g/10 min. The melt mass flow rate is measured on the basis of JIS K7210-1:2014.

The lid 60 may be formed to include a conductive material. The phrase "formed to include a conductive material" means that the content of the conductive material is 50 mass% or more, preferably 80 mass% or more, more preferably 90 mass% or more, and still more preferably 95 mass% or more when the total amount of materials constituting the lid 60 is defined as 100 mass%. In other words, the materials constituting the lid 60 can contain materials other than the conductive material in addition to the conductive material.

The conductive material constituting the lid 60 is, for example, a metal material. The metal material constituting the lid 60 is, for example, aluminum, an aluminum alloy, nickel, copper, or a copper alloy. For example, in a case where the electrode assembly 20 is a lithium ion battery, the lid 60 connected to the positive electrode is preferably made of aluminum or an aluminum alloy. The lid 60 connected to the negative electrode is preferably made of nickel, copper, or a copper alloy. The material constituting the lid 60 connected to the negative electrode may be copper plated with nickel. The material constituting the lid 60 may include a recycled metal material. In a case where the lid 60 is formed to include the conductive material, the lid 60 also functions as the electrode terminal 30. Since the electrode terminal 30 can be omitted from the electrical storage device 10, it is possible to simplify the configuration of the electrical storage device 10.

In the case where the lid 60 is formed to include the conductive material, the lid 60 may be bonded to the outer package film 50 via an adhesive film. The adhesive film can be arbitrarily selected as long as it is a film capable of bonding the outer package film 50 to the lid 60. The adhesive film is preferably a laminate film including at least a heat-sealable resin layer, a heat-resistant base material layer, and a heat-sealable resin layer in the stated order. As specifications related to the heat-sealable resin layer of the adhesive film, specifications related to the heat-sealable resin layer 53 can be applied. As materials for forming the heat-sealable resin layers on both sides of the adhesive film, the same material or different materials may be used, and materials that match the material for forming the heat-sealable resin layer 53 of the outer package film 50 and the material for forming the lid 60 are appropriately selected. The material for forming the heat-sealable resin layer of the adhesive film, which is bonded to the lid 60, is preferably an acid-modified polyolefin-based resin obtained by graft modification with an acid such as maleic anhydride. For the heat-sealable resin layer of the adhesive film, which is bonded to the outer package film 50, the same material as that for forming the heat-sealable resin layer 53 of the outer package film 50 is preferably used.

For the heat-resistant base material layer, any film may be used as long as it is made from a heat-resistant resin, and examples thereof include non-stretched or stretched films of polyethylene terephthalate, polyethylene naphthalate, polyphenylene sulfide, polymethylpentene (registered trademark), polyacetal cyclic polyolefin, polyethylene, polypropylene and the like. Note that polyethylene terephthalate is particularly preferable because it is inexpensive and has high strength.

The adhesive film preferably has adhesion. When the second seal portion 80, which will be described later, is formed in a state where the adhesive film is disposed between the outer package film 50 and the lid 60, the position of the adhesive film with respect to the lid 60 and the outer package film 50 is unlikely to deviate. By incorporating an adhesion-imparting resin into the heat-sealable resin layer of the adhesive film, adhesion can be imparted to the adhesive film. Examples of the adhesion-imparting resin include amorphous polyolefins. Examples of the amorphous polyolefin include amorphous polypropylene, and copolymers of amorphous propylene and another α-olefin. The content of the adhesion-imparting resin with respect to the parent material forming the heat-sealable resin is preferably 10 wt% to 20 wt% or less.

The lid 60 includes a body 60A. The body 60A includes a first surface 61, a second surface 62, and a sealing surface 63. The first surface 61 faces the electrode assembly 20. The second surface 62 is a surface on a side opposite to the first surface 61. The sealing surface 63 is connected to the first surface 61 and the second surface 62 and is bonded to the heat-sealable resin layer 53 of the outer package film 50.

The sealing surface 63 includes a first sealing surface 63A, a second sealing surface 63B, a third sealing surface 63C, and a fourth sealing surface 63D. The first sealing surface 63A forms the upper surface of the lid 60. The first sealing surface 63A extends in a first direction (LR direction in the present embodiment) in front view of the lid 60. The second sealing surface 63B and the third sealing surface 63C are connected to the first sealing surface 63A and form side surfaces of the lid 60. The second sealing surface 63B and the third sealing surface 63C extend in a second direction (UD direction in the present embodiment) crossing the first direction in front view of the lid 60. In the present embodiment, the first direction and the second direction orthogonally cross each other in front view of the lid 60. The first direction and the second direction are not required to orthogonally cross each other in front view of the lid 60. The fourth sealing surface 63D forms the lower surface of the lid 60. The fourth sealing surface 63D extends in a first direction (LR direction in the present embodiment) in front view of the lid 60.

In a case where the body 60A has a plate shape, the body 60A is preferably thick to some extent to prevent the outer packaging 40 from being deformed even if the electrical storage devices 10 are disposed in an overlapping manner. From another viewpoint, in the case where the body 60A has a plate shape, the sealing surface 63 of the body 60A is preferably thick to some extent such that the sealing surface 63 of the body 60A and the outer package film 50 can be suitably heat-sealed when the second seal portion 80, which will be described later, is formed. The minimum value of the thickness of the body 60A is, for example, 1.0 mm, more preferably 3.0 mm, still more preferably 4.0 mm. The maximum value of the thickness of the body 60A is, for example, 20 mm, more preferably 15 mm, still more preferably 10 mm. The maximum value of the thickness of the body 60A may be 20 mm or more. The thickness of the material constituting the body 60A is preferably in the range of 1.0 mm to 20 mm, 1.0 mm to 15 mm, 1.0 mm to 10 mm, 3.0 mm to 20 mm, 3.0 mm to 15 mm, 3.0 mm to 10 mm, 4.0 mm to 20 mm, 4.0 mm to 15 mm, or 4.0 mm to 10 mm. In the present embodiment, the material constituting the body 60A does not include a film defined by Japanese Industrial Standard (JIS), Packaging Terminology Standard, in the case where the expression of plate shape is used for the body 60A. Note that the thickness of the body 60A may differ depending on the parts of the body 60A. In the case where the thickness of the body 60A differs depending on the parts, the thickness of the body 60A is the thickness of the thickest part.

The body 60A further includes boundaries 64, 65, 66, and 67. The boundary 64 is a boundary between the first sealing surface 63A and the second sealing surface 63B. The boundary 65 is a boundary between the first sealing surface 63A and the third sealing surface 63C. The boundary 66 is a boundary between the fourth sealing surface 63D and the second sealing surface 63B. The boundary 67 is a boundary between the fourth sealing surface 63D and the third sealing surface 63C. The shapes of the boundaries 64 to 67 may be angular, or may be rounded off by round chamfering. In the present embodiment, the boundaries 64 to 67 are angular.

Examples of the material for forming the body 60A include polyester-based resins such as polyethylene terephthalate-based resins and polybutylene terephthalate-based resins, polyolefin-based resins such as polyethylene-based resins, fluorine-based resins and polypropylene-based resins, cyclic polyolefin-based resins, or acid-modified polyolefin-based resins obtained by graft-modifying the polyolefin-based resin with an acid such as maleic anhydride. From the viewpoint of suitably heat-sealing the body 60A and the outer package film 50, main materials of the materials constituting the body 60A and the materials constituting the heat-sealable resin layer 53 of the outer package film 50 are preferably the same. In the present embodiment, examples of the main materials of the materials constituting the body 60A and the materials constituting the heat-sealable resin layer 53 include polyolefin-based resins such as polyethylene-based resins and polypropylene-based resins, and acid-modified polyolefin-based resins obtained by graft-modifying the polyolefin-based resin with an acid such as maleic anhydride. Note that the main material refers to, for example, a material that accounts for 50% or more of the materials contained in constituent elements.

In the present embodiment, a through-hole 60X into which each electrode terminal 30 is inserted is formed in the body 60A. The through-hole 60X penetrates through the first surface 61 and the second surface 62. The electrode terminal 30 protrudes to the outside of the outer packaging 40 through the through-hole 60X formed in the body 60A in the state where the electrode assembly 20 is wrapped by the outer package film 50. A small gap between the through-hole 60X in the body 60A and the electrode terminal 30 is filled with, for example, a resin. Note that in the electrical storage device 10, the position at which the electrode terminal 30 protrudes to the outside can be arbitrarily selected. For example, the electrode terminal 30 may protrude to the outside from a hole formed in any one of the six surfaces that the outer packaging 40 has. In this case, the small gap between the outer packaging 40 and the electrode terminal 30 is filled with, for example, a resin or a film. In another example, the electrode terminal 30 may protrude to the outside of the outer packaging 40 from between the sealing surface 63 of the body 60A and the outer package film 50. In this case, the through-hole 60X may not be formed in the lid 60. Although the body 60A and the electrode terminal 30 are provided as separated members in the electrical storage device 10, the body 60A and the electrode terminal 30 may be integrally formed. Note that the through-hole 60X may not be formed in the body 60A even in a case where the electrode terminal 30 does not protrude from an end edge of the outer packaging 40.

In a process of manufacturing the electrical storage device 10, an intermediate body in which the lids 60 are disposed at both end parts of the electrode assembly 20 is manufactured. The intermediate body is moved to the workplace of the next process. In the present embodiment, a fixing jig 100 for fixing the position of each lid 60 with respect to the electrode assembly 20 is attached to the intermediate body in the process in which the intermediate body moves. Therefore, the lid 60 includes protrusions 60B to which the fixing jig 100 is attached in addition to the body 60A.

The protrusions 60B protrude from the second surface 62 of the body 60A. The number of protrusions 60B included in the lid 60 can be arbitrarily selected. In the present embodiment, each lid 60 includes two protrusions 60B. The lid 60 may include one protrusion 60B or three or more protrusions 60B. The positions where the protrusions 60B protrude from the second surface 62 can be arbitrarily selected. In the case where the through-hole 60X is formed in the body 60A as in the present embodiment, the protrusions 60B are preferably formed at positions separated from the through-hole 60X such that the electrode terminal 30 and the protrusions 60B do not interfere with each other.

A specific configuration of the protrusion 60B can be arbitrarily selected as long as it is possible to fix the fixing jig 100 with the configuration. In the present embodiment, the protrusions 60B are fixing components buried in the body 60A. The fixing components are, for example, insert nuts. Female screws or male screws are formed in the insert nuts. As illustrated in Fig. 5, the end parts of the protrusions 60B on the side opposite to the end parts protruding from the second surface 62 are buried inside the body 60A. In other words, the protrusions 60B do not penetrate through the body 60A. In a case where the insert nuts are formed of a metal material, the insert nuts are preferably subjected to an anti-corrosion treatment such as a chromate treatment in order to enhance the strength of bonding to the lid 60. The load capacity of one insert nut is preferably equal to or greater than a value obtained by dividing the weight of the electrical storage device 10 by the total number of protrusions 60B. Note that the fixing component may have at least one of a suction cup, a magnet, a projecting portion, a magic tape (registered trademark), a spring pin, and a clamp so that the fixing jig 100 can be fixed.

As illustrated in Fig. 6, the fixing jig 100 includes a lid fixing portion 110 to which the lid 60 is fixed and a placement portion 120 on which the electrode assembly 20 is placed. The lid fixing portion 110 and the placement portion 120 are coupled by an arbitrary means. The lid fixing portion 110 and the placement portion 120 may be integrally formed.

The lid fixing portion 110 includes a support portion 111 on which the lid 60 is placed and a wall portion 112 that stands from the support portion 111. Holes 112X in accordance with the number of protrusions 60B are formed in the wall portion 112. The lid 60 is fixed to the lid fixing portion 110 by screws formed in the insert nuts constituting the protrusions 60B being engaged with the male screws or the female screws. Note that in a case where the screws formed in the insert nuts constituting the protrusions 60B are female screws, the female screws are engaged with male screws inserted into the holes 112X. In a case where the screws formed in the insert nuts constituting the protrusions 60B are male screws, the male screws are engaged with female screws formed in nuts, sockets, or the like. The female screws may be entirely disposed outside the holes 112X or may be at least partially inserted into the holes 112X. A slit 112Y into which the electrode terminal 30 is inserted is further formed in the wall portion 112. The slit 112Y penetrates through the wall portion 112. Note that the wall portion 112 may include a plurality of divided parts and may be configured to sandwich the electrode terminal 30 by the plurality of parts. In a case where the lid 60 also functions as the electrode terminal, the slit 112Y can also be omitted. The placement portion 120 has, for example, a plate shape, and substantially the entire electrode assembly 20 is placed thereon. Note that the fixing jig 100 may be attached to the electrical storage device 10 as a completed product. In other words, the fixing jig 100 can also be used when the electrical storage device 10 is used.

In the present embodiment, surfaces of the outer package film 50 which face each other (heat-sealable resin layer 53) are heat-sealed in a state where the outer package film 50 is wrapped around the electrode assembly 20 to have opening parts 40A to thereby form a first seal portion 70.

The first seal portion 70 is formed by a part including a first edge 50A and a part including a second edge 50B of the outer package film 50 illustrated in Fig. 4 being heat-sealed. The first seal portion 70 extends in a longitudinal direction (FB direction) of the outer packaging 40. In the outer packaging 40, the position at which the first seal portion 70 is formed can be arbitrarily selected. In the present embodiment, a root 70X of the first seal portion 70 is preferably located on a side 43 of a boundary between the first surface 41 and the second surface 42 of the outer packaging 40. The first surface 41 has a larger area than the second surface 42. The root 70X of the first seal portion 70 may be located on an arbitrary surface of the outer packaging 40. In the present embodiment, the first seal portion 70 protrudes further outward than the electrode assembly 20 in plan view. The first seal portion 70 may be folded toward the second surface 42 of the outer packaging 40, or may be folded toward the first surface 41, for example.

In the present embodiment, a second seal portion 80 is formed by the heat-sealable resin layer 53 of the outer package film 50 and the sealing surface 63 of the lid 60 being heat-sealed. Hereinafter, the sealing strength between the heat-sealable resin layer 53 of the outer package film 50 and the sealing surface 63 of the lid 60 may be referred to as sealing strength of the second seal portion 80. Note that the sealing strength of the second seal portion 80 is the sealing strength between the long side part of the sealing surface 63, that is, the heat-sealable resin layer 53 on the sealing surface 63 extending in the LR (width) direction in Fig. 1A and the lid 60.

The sealing strength of the second seal portion 80 is measured as follows. First, a notch is formed at a part of the outer package film 50 constituting the first surface 41 of the outer packaging 40, and three strip-shaped members 41X, 41Y, and 41Z (see the two-dotted chain line in Fig. 1B) aligned in the LR direction are formed. The widths of the three strip-shaped members 41X, 41Y, and 41Z in the LR direction are 15 mm. End parts of the strip-shaped members 41X, 41Y, and 41Z are joined to the lid 60 at the second seal portion 80. The length of the lid 60 in the LR direction is 45 mm or more. Next, the sealing strength of each of strip-shaped members 41X, 41Y, and 41Z is measured by pulling the end parts of the strip-shaped members 41X, 41Y, and 41Z on the side opposite to the end parts thereof joined to the lid 60 upward (the direction opposite to the first surface 41B) in the UD direction. In the present embodiment, the sealing strength of the second seal portion 80 is an average value of the sealing strengths of the strip-shaped members 41X, 41Y, and 41Z. In a case where the length of the lid 60 in the LR direction is less than 45 mm, three strip-shaped members having an arbitrary width X mm, which is less than 15 mm, are formed, and the sealing strength of the three strip-shaped members is measured by a method similar to that adopted when the length of the lid 60 in the LR direction is 45 mm or more. Each obtained sealing strength is divided by an arbitrary width X mm and multiplied by 15 to be converted into the sealing strength of the three strip-shaped members at the width of 15 mm. The sealing strength of the second seal portion 80 is an average value of the sealing strengths of the three strip-shaped members converted into the value at the width of 15 mm. Note that the sealing strength of the second seal portion 80 in a case where the lid 60 is divided into a plurality of parts including long sides and short sides is sealing strength of the long side parts of the sealing surfaces 63 of the plurality of parts.

From the viewpoint of suitably maintaining the state where the electrode assembly 20 is sealed with the outer packaging 40, the sealing strength of the second seal portion 80 is preferably 40 N/15 mm or more, more preferably 50 N/15 mm or more, still more preferably 60 N/15 mm or more, still more preferably 70 N/15 mm or more, still more preferably 85 N/15 mm or more. In a case where the sealing strength of the second seal portion 80 is 40 N/15 mm or more, the state where the electrode assembly 20 is sealed with the outer packaging 40 is suitably maintained even if the electrical storage device 10 is used for, for example, several years (less than 10 years). In a case where the sealing strength of the second seal portion 80 is 85 N/15 mm or more, the state where the electrode assembly 20 is sealed with the outer packaging 40 is suitably maintained even if the electrical storage device 10 is used for, for example, 10 years or more. The sealing strength of the second seal portion 80 is preferably 300 N/15 mm or less. The sealing strength of the second seal portion 80 is preferably in the range of 40 N/15 mm to 300 N/15 mm, 50 N/15 mm to 300 N/15 mm, 60 N/15 mm to 300 N/15 mm, 70 N/15 mm to 300 N/15 mm, or 85 N/15 mm to 300 N/15 mm.

### <1-2. Method for manufacturing electrical storage device>

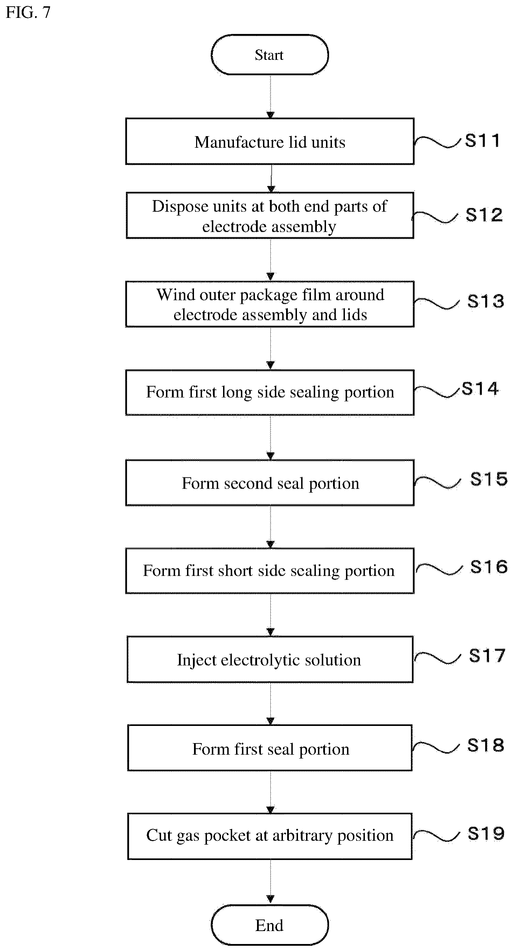

Fig. 7 is a flowchart illustrating an example of a method for manufacturing the electrical storage device 10. The method for manufacturing the electrical storage device 10 includes, for example, a first process, a second process, a third process, a fourth process, a fifth process, a sixth process, a seventh process, an eighth process, and a ninth process. The first to ninth processes are performed by, for example, a manufacturing apparatus of the electrical storage device 10. Note that the first to ninth processes below are merely convenient labels for processes in the method for manufacturing the electrical storage device 10 and do not necessarily mean the order of the processes.

In the first process (lid unit manufacturing process) in Step S11, the manufacturing apparatus manufactures the pair of lid units 60Z in which the lids 60 and the electrode terminals 30 are bonded.

The second process (connection process) in Step S12 is carried out later than the first process. In the second process, the manufacturing apparatus disposes the pair of lid units 60Z at both end parts of the electrode assembly 20 and electrically connects the electrode terminals 30 to the electrode assembly 20.

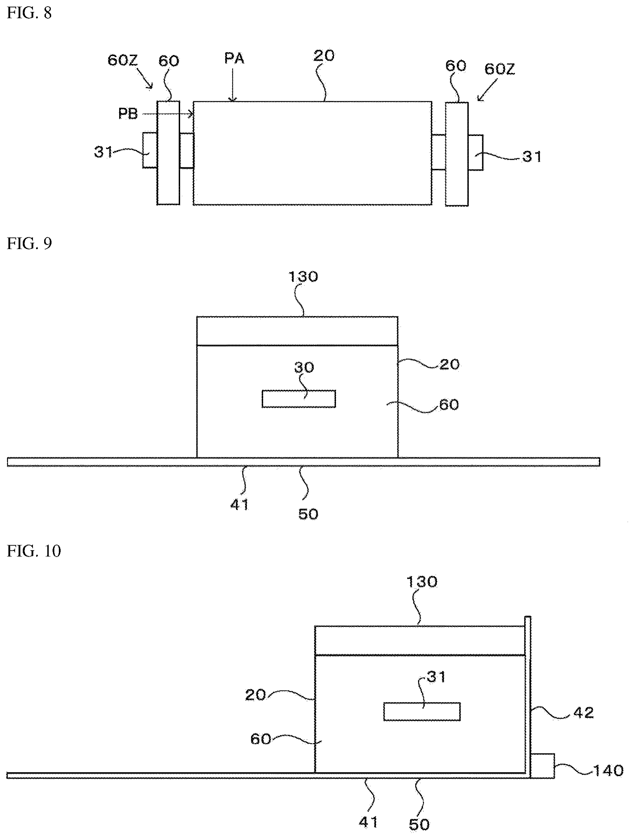

Fig. 8 is a diagram related to the second process. In the second process, the manufacturing apparatus positions the pair of lid units 60Z with respect to the electrode assembly 20 by a positioning device (not illustrated). In the second process, positioning of the pair of lid units 60Z with respect to the electrode assembly 20 is performed with reference to a long side PA and a short side PB of the electrode assembly 20 in plan view, for example. As the positioning device, it is possible to use a known image processing device, for example. In the present embodiment, an image processing device manufactured by Keyence Corporation is used as the image processing device. A detection scheme of the image processing device is edge position measurement using a transmission inspection. The resolution of the image processing device is 0.01 mm. In the present embodiment, the short side PB is detected through the transmission inspection using the image processing device, and the correction amount from the reference side on the opposite side is calculated from the position information. After the completion of the second process, the fixing jig 100 (see Fig. 6) is attached to the intermediate body including the electrode assembly 20 and the pair of lid units 60Z. The intermediate body is transported to a workplace for the third process in the state in which the fixing jig 100 is attached thereto.

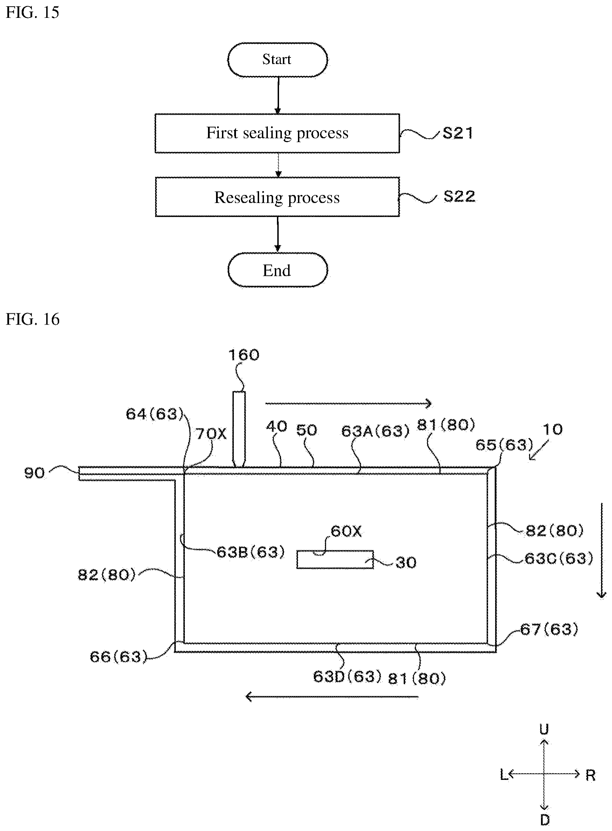

The third process (winding process) in Step S13 is carried out later than the second process. In the third process, the fixing jig 100 is removed from the intermediate body. In the third process, the manufacturing apparatus winds the outer package film 50 around the electrode assembly 20 and the lids 60. In the third process, the positioning of the outer package film 50 with respect to the intermediate body is performed on the basis of the long side PA and the short side PB set in the second process. Also, the outer package film 50 with a larger area than the outer package film 50 included in the electrical storage device 10 as a completed product is used to form a bulging portion 90 (see Fig. 16) in the third process.

Figs. 9 to 11 are diagrams related to the third process. In the third process, the manufacturing apparatus places the electrode assembly 20 on the outer package film 50. The first surface 41, which is one of the pair of first surfaces 41 of the outer packaging 40, is formed by the electrode assembly 20 being placed on the outer package film 50. The manufacturing apparatus winds the outer package film 50 around the electrode assembly 20 and the lids 60 while pressing at least either the electrode assembly 20 or the lids 60 placed on the outer package film 50 against the outer package film 50. In the present embodiment, the electrode assembly 20 and the lids 60 are pressed against the outer package film 50 by a bar-shaped pressing member 130, for example. Since the third process can be executed in the state where the electrode assembly 20 and the lids 60 are placed on the table where the outer package film 50 is put, it is possible to easily wind the outer package film 50 around the electrode assembly 20 and the lids 60. Note that the bar-shaped pressing member 130 is preferably in contact with substantially the entire upper surfaces of the electrode assembly 20 and the lids 60.

As illustrated in Fig. 10, the outer package film 50 is folded to form the second surface 42, which is one of the pair of second surfaces 42 of the outer packaging 40, in the third process. After the outer package film 50 is folded, parts of the outer package film 50 corresponding to corners of the lids 60 are pressed against the lids 60 by a bar-shaped pressing member 140, for example. Note that the pressing member 140 may have a shape with which the entire second surface 42 is pressed against the electrode assembly 20 and the lids 60 or may have an L shape, for example, corresponding to the corner between the first surface 41 and the second surface 42.

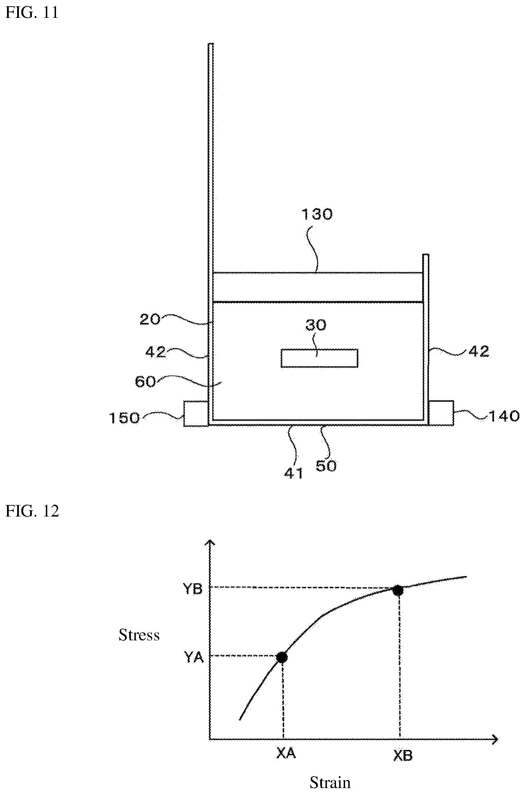

Next, the outer package film 50 is folded to form the other second surface 42 out of the pair of second surfaces 42 of the outer packaging 40 in the third process as illustrated in Fig. 11. After the outer package film 50 is folded, parts of the outer package film 50 corresponding to corners of the lids 60 are pressed against the lids 60 by a bar-shaped pressing member 150, for example.

Next, after the pressing member 130 (see Fig. 9) is separated from the electrode assembly 20, the outer package film 50 is folded to form the other first surface 41 out of the pair of first surfaces 41 of the outer packaging 40.

In the winding process, the manufacturing apparatus preferably pulls the part of the outer package film 50 corresponding to the bulging portion 90 (see Fig. 16) in an arbitrary direction with predetermined strength from the viewpoint of suppressing wrinkles and loosening in the outer package film 50.

Fig. 12 is an example of a graph showing a relationship between strain and a stress acting on the outer package film 50. In a case where excessively small strain and stress act on the outer package film 50, loosening occurs in the outer package film 50 wound around the electrode assembly 20. In the present embodiment, predetermined strength is determined such that the strain acting on the outer package film 50 is equal to or greater than a lower limit value XA (%) and the stress acting on the outer package film 50 is equal to or greater than a lower limit value YA (MPa) to suppress loosening of the outer package film 50.

On the other hand, in a case where excessively large strain and stress act on the outer package film 50, wrinkles occur in the outer package film 50 wound around the electrode assembly 20. In the present embodiment, predetermined strength is determined such that the strain acting on the outer package film 50 is equal to or less than an upper limit value XB (%) and the stress acting on the outer package film 50 is equal to or less than an upper limit value YB (MPa) to suppress wrinkles of the outer package film 50.

In other words, since the part of the outer package film 50 corresponding to the bulging portion 90 is pulled with predetermined strength in the winding process, the strain acting on the outer package film 50 falls within the range of equal to or greater than the lower limit value XA (%) and equal to or less than the upper limit value XB (%), and the stress acting on the outer package film 50 falls within the range of equal to or greater than the lower limit value YA (MPa) and equal to or less than the upper limit value YB (MPa) in the present embodiment. An example of the lower limit value XA is 0.10 (%). An example of the upper limit value XB is 0.43 (%). An example of the lower limit value YA is 1.1 (MPa). An example of the upper limit value YB is 13.2 (MPa).

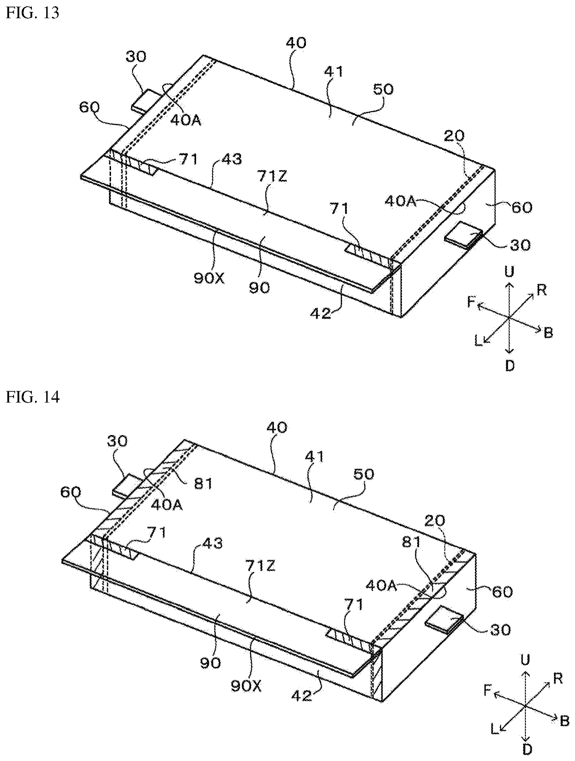

The fourth process in Step S14 is carried out later than the third process. As illustrated in Fig. 13, the manufacturing apparatus forms a first FB direction sealing portion 71 having an unsealed portion 71Z at the center of the part of the outer package film 50 where the bulging portion 90 is formed, in the fourth process. The first FB direction sealing portion 71 extends in the FB direction. Note that the hatched part in Fig. 13 illustrates an example of a region where the first FB direction sealing portion 71 is formed.

The fifth process (sealing process) in Step S15 is carried out earlier or later than the fourth process. Also, the fifth process may be carried out in parallel with the third process. As illustrated in Fig. 14, the manufacturing apparatus forms the second seal portion 80 in the fourth process. In the fifth process, the second seal portion 80 is preferably formed in the state where the fixing jig 100 is attached to the lid 60. Note that the hatched part illustrated in Fig. 14 illustrates an example of a region where the second seal portion 80 is formed.

As illustrated in Fig. 15, the fifth process preferably includes a first sealing process in Step S21 and a resealing process in Step S22 carried out later than the first sealing process.

In the first sealing process, the manufacturing apparatus preferably forms the second seal portion 80 while moving either the sealing device 160 (see Fig. 16) or the lids 60 with respect to the other from the viewpoint of suitably bonding the boundaries 64 to 67, in particular, of the lids 60 to the outer package film 50. In the present embodiment, the second seal portion 80 is formed while the sealing device 160 moves with respect to the lids 60. In the present embodiment, an ultrasonic sealing device or a welding machine, for example, is used as the sealing device 160. The sealing device 160 may be, for example, a heat sealing device using a roller or a heat sealing device using a sealing bar shorter than any of the sealing surfaces 63A to 63D of the lids 60.

Fig. 16 is a diagram related to the first sealing process. In the first sealing process, the sealing device 160 preferably bonds the sealing surfaces next to the outer package film 50 in order. The sealing device 160 moves to pass the first sealing surface 63A, the third sealing surface 63C, the fourth sealing surface 63D, and the second sealing surface 63B in this order, for example. The sealing device 160 may move to pass the second sealing surface 63B, the fourth sealing surface 63D, the third sealing surface 63C, and the first sealing surface 63A in this order. In the first sealing process, the second seal portion 80 may be formed by two sealing devices 160, for example. For example, one of the sealing devices 160 may start to move from the boundary 67 and move to pass the third sealing surface 63C and the first sealing surface 63A in this order. The other sealing device 160 may start to move from the boundary 67 and move to pass the fourth sealing surface 63D and the second sealing surface 63B in this order. Note that in the first sealing process, note that in the first sealing process, the sealing device 160 may start to move from an intermediate portion of the first sealing surface 63A, the second sealing surface 63B, the third sealing surface 63C, or the fourth sealing surface 63D.

The resealing process in Step S22 is carried out from the viewpoint of further enhancing sealing strength of the second seal portion 80. A method of the resealing process can be arbitrarily selected. The resealing process may be performed by the same method as that of the first sealing process, for example. In the resealing process, the first sealing surface 63A to the fourth sealing surface 63D may be heat-sealed in an arbitrary order using a sealing bar.

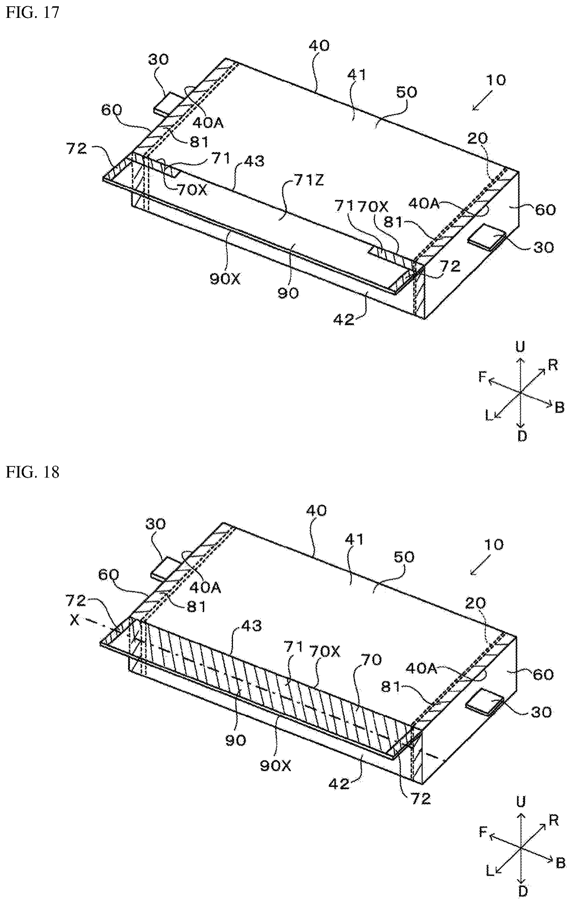

The sixth process in Step S16 is carried out earlier or later than the fifth process. The sixth process may be carried out in parallel with the fourth process. As illustrated in Fig. 17, the manufacturing apparatus forms the first LR direction sealing portion 72 extending in the LR direction in the sixth process. In the sixth process, the first LR direction sealing portion 72 is formed to partially overlap with the first FB direction sealing portion 71 at a part including the root 70X. The bulging portion 90 with a larger area than the first seal portion 70 included in the electrical storage device 10 as a completed product in plan view is completed by completing the sixth process. Note that the hatched portion in Fig. 17 illustrates an example of a region where the first LR direction sealing portion 72 is to be formed.

The seventh process in Step S17 is carried out later than the sixth process. In the seventh process, the manufacturing apparatus injects an electrolytic solution via an opening 90X of the bulging portion 90. After the seventh process, an edge including the opening 90X of the bulging portion 90 is heat-sealed, and an aging process is carried out. Gas generated in the aging process is discharged via the opening 90X.

The eighth process in Step S18 is carried out after completion of the aging process. As illustrated in Fig. 18, the manufacturing apparatus forms the first seal portion 70 in the eighth process. In the eighth process, the first FB direction sealing portion 71 and the first LR direction sealing portion 72 are sealed again. Note that the hatched part in Fig. 18 illustrates an example of a region where the first seal portion 70 is formed.

The ninth process in Step S19 is carried out after the eighth process. In the ninth process, the manufacturing apparatus cuts a part of the bulging portion 90 other than the first seal portion 70. The one-dotted chain line X illustrated in Fig. 18 is an example of a line indicating the position at which the bulging portion 90 is cut in the ninth process.

### <1-3. Transport jig>

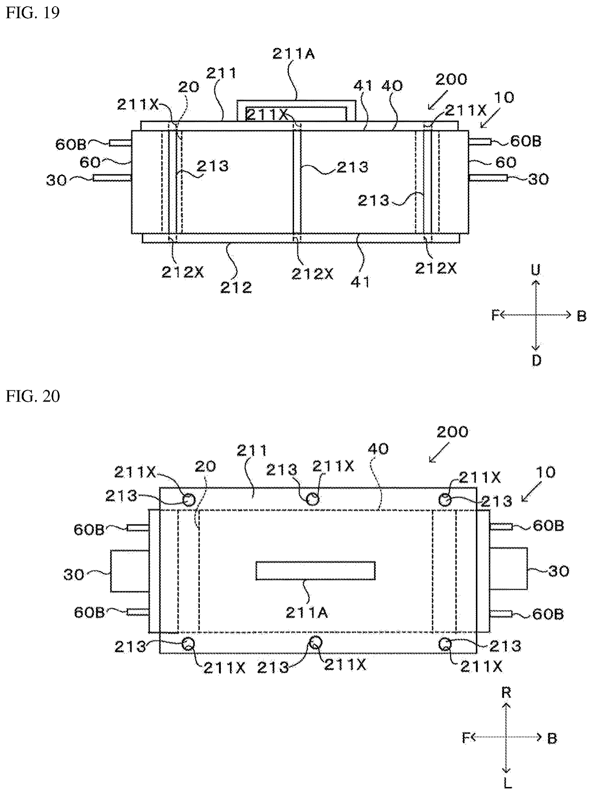

In the above-described embodiment, a transport jig 200 to transport the electrode assembly 20, the intermediate body, or the completed electrical storage device 10 (hereinafter, these will be referred to as "transport targets") may be used when the electrical storage device 10 is manufactured. Fig. 19 is a side view of the electrical storage device 10 with the transport jig 200 attached thereto. Fig. 20 is a plan view of Fig. 19.

The transport jig 200 includes a pair of plates 211 and 212 and coupling portions 213 that couple the pair of plates 211 and 212. The plate 211 covers one of the first surfaces 41 of the outer packaging 40. The plate 212 covers the other first surface 41 of the outer packaging 40. A handle 211A is attached to the plate 211. Therefore, an operator can easily grip the transport jig 200. Note that the handle 211A can be omitted.

The area of the pair of plates 211 and 212 in plan view is greater than the area of the first surface 41 of the outer packaging 40. Therefore, the pair of plates 211 and 212 stick out from the first surface 41 in the LR direction. Holes 211X and 212X into which the coupling portions 213 are inserted are formed at parts of the pair of plates 211 and 212 sticking out from the first surface 41.

A specific configuration of the coupling portions 213 can be arbitrarily selected as long as the pair of plates 211 and 212 can be coupled with the configuration. The coupling portions 213 are preferably attachable to and detachable from the pair of plates 211 and 212 so that the transport jig 200 can be easily attached to and detached from the transport target. In the present embodiment, the coupling portions 213 are bolts. The coupling portions 213 are inserted into the holes 211X and 212X, for example, and are fixed to the pair of plates 211 and 212 by nuts.

The number of coupling portions 213 included in the transport jig 200 can be arbitrarily selected. In the present embodiment, the transport jig 200 includes six coupling portions 213. The transport jig 200 may include one to five coupling portions 213 or may include seven or more coupling portions 213.

### <1-4. Action and effect of electrical storage device>

According to the electrical storage device 10, the protrusion 60B is formed on the lid 60, and it is thus possible to attach the fixing jig 100 to the protrusion 60B. Since the positions of the lids 60 with respect to the electrode assembly 20 in the intermediate body can be fixed, high accuracy of the positions of the lids 60 with respect to the electrode assembly 20 is achieved.

### [2. Modifications]

The above-described embodiment is an example of possible forms of the electrical storage device, the lid, the fixing jig, the method for manufacturing the electrical storage device, and the transport jig according to the present invention and is not intended to limit the forms. The electrical storage device, the lid, the fixing jig, the method for manufacturing the electrical storage device, and the transport jig according to the present invention can adopt forms different from the forms exemplified in the embodiment. An example thereof is a form in which a part of the configuration of the embodiment is replaced, changed or omitted, or a form in which a new configuration is added to the embodiment. Some examples of modifications of the embodiment will be described below. Note that the following modifications can be combined as long as they are not technically contradictory.

### <2-1>

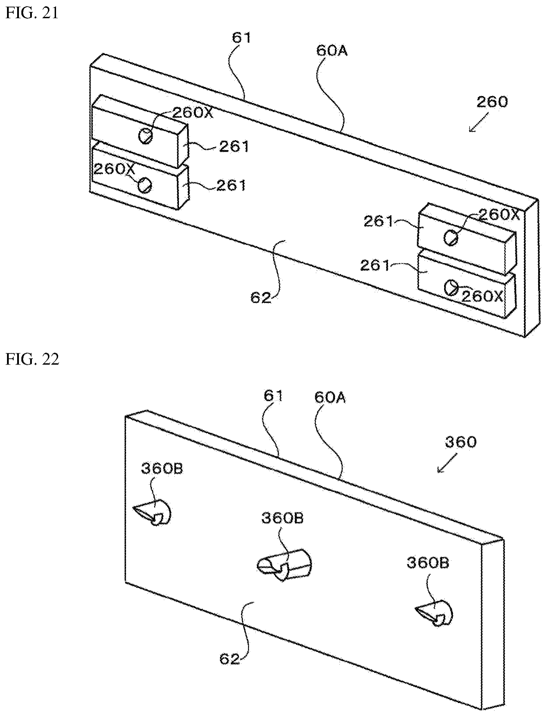

In the above-described embodiment, the configuration of the lids 60 can be arbitrarily changed. Fig. 21 is a perspective view of a lid 260 in a modification. The lid 260 may include a body 60A and thick portions 261 protruding from a second surface 62 of the body 60A. The number of thick portions 261 included in the lid 260 can be arbitrarily selected. In the example illustrated in Fig. 21, the lid 260 includes four thick portions 261. The lid 260 may include one to three thick portions 261 or five or more thick portions 261. Holes 260X are formed in the thick portions 261 and the body 60A. It is preferable that the holes 260X do not penetrate through the thick portions 261 and the body 60A. In this modification, protrusions 60B are screws inserted into the holes 260X. Arbitrary fixing members may be inserted into the holes 260X. Female screws may be formed on inner circumferential surfaces of the holes 260X. In the modification illustrated in Fig. 21, thick portions may be formed at positions in the first surface 61 of the body 60A facing the thick portions 261 via the body 60A. In this case, it is preferable that the holes 260X do not penetrate through the thick portions 261, the body 60A, and the thick portions formed in the first surface 61. Note that the thick portions 261 and the thick portions formed in the first surface 61 may not face each other via the body 60A. In short, the thick portions may be formed on at least either the first surface 61 or the second surface 62.

Fig. 22 is a perspective view of a lid 360 in another modification. The lid 360 may include a body 60A and protrusions 360B that protrude from a second surface 62 of the body 60A. The protrusions 360B may be formed integrally with the body 60A. The protrusions 360B have a shape corresponding to a pulling pin provided to suppress warpage of the lid 60 when the lid 360 is insert-molded, for example. Note that the number of protrusions 360B may be one, two, four or more in Fig. 22.

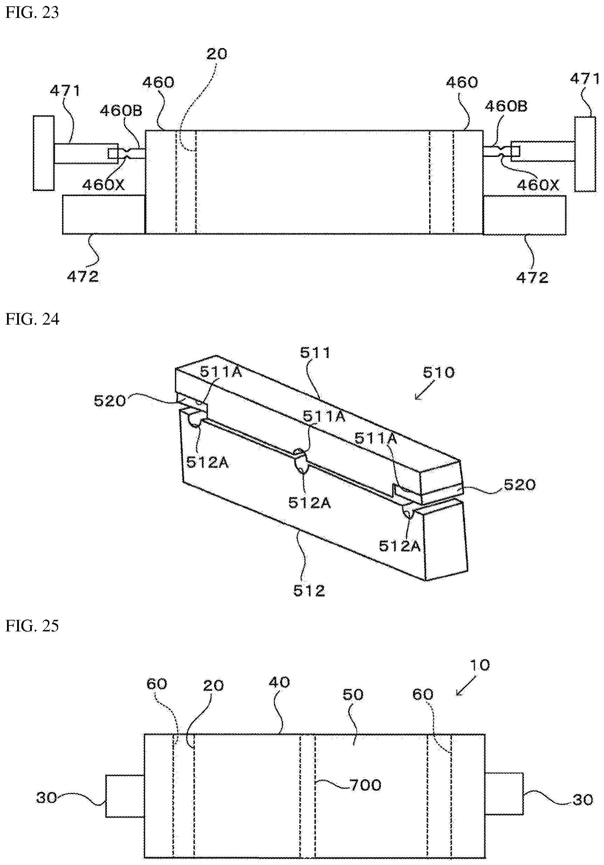

Fig. 23 is a side view of an electrical storage device 10 including lids 460 in yet another modification. Each lid 460 includes a protrusion 460B. The protrusion 460B includes a fracture portion 460X. The fracture portion 460X is a finely processed portion of the protrusion 460B. In the protrusion 460B, the position where the fracture portion 460X is formed can be arbitrarily selected. In the present embodiment, the fracture portion 460X is formed at an intermediate portion of the protrusion 460B. The fracture portion 460X may be formed at a root of the protrusion 460B. In the process of manufacturing the electrical storage device 10, the position of the protrusion 460B with respect to the electrode assembly 20 is fixed by a fixing jig 471. Movement of the electrode assembly 20 is restricted by the fixing jig 472. After the ninth process (see Fig. 7) in the process of manufacturing the electrical storage device 10 is ended, for example, the fixing jig 471 is removed from the protrusion 460B, and the protrusion 460B is fractured at the fracture portion 460X. Since the protrusion 460B is shortened, it is possible to reduce the volume of the lid 460 and the volume of the electrical storage device 10. This makes it possible to raise energy density of the electrical storage device 10.

<2-2>
In the above-described embodiments, the configuration of the lid fixing portion 110 of the fixing jig 100 can be arbitrarily changed. Fig. 24 is a perspective view of a lid fixing portion 510 in a modification. The lid fixing portion 510 can be used to fix the lid 360 illustrated in Fig. 22, for example.

The lid fixing portion 510 includes a first fixing portion 511 and a second fixing portion 512 configured to sandwich the protrusions 360B. The first fixing portion 511 has three recessed portions 511A that are recessed on the side opposite to the second fixing portion 512. The second fixing portion 512 has three recessed portions 512A that are recessed on the side opposite to the first fixing portion 511. The protrusions 360B are sandwiched and fixed between the mutually facing recessed portions 511A and the recessed portions 512A. Among the three recessed portions 511A, buffering materials 520 are preferably disposed in the recessed portions 511A at both end parts. The buffering materials 520 preferably have flexibility to be deformed along the shapes of the protrusions 360B. Since the buffering material 520 can be flexibly deformed in accordance with the shapes of the protrusions 360B when the protrusions 360B are sandwiched, it is possible to suitably fix the protrusions 360B even in a case where the shapes of the individual protrusions 360B are slightly different. In addition, since the protrusions 360B are protected by the buffering material 520, the protrusions 360B are unlikely to break. Note that the number of recessed portions 511A and 512A formed in the lid fixing portion 510 can be arbitrarily changed in accordance with the number of protrusions 360B of the lid 360 that is a target of the fixation.

<2-3>
In the above-described embodiment, a strip-shaped member 700 that is bonded to the inner surface of the outer package film 50 may be wound around the electrode assembly 20 as illustrated in Fig. 25 from the viewpoint of enhancing adhesion between the outer package film 50 and the electrode assembly 20. As a material constituting the strip-shaped member 700, it is possible to use an arbitrary material. For example, a sheet formed of an olefin resin may be used as the strip-shaped member 700. The strip-shaped member 700 may be bonded to the inner surface of the outer package film 50 with an adhesive or the like or may be bonded to the inner surface of the outer package film 50 through heat sealing. The strip-shaped member 700 may or may not be bonded to the electrode assembly 20. The strip-shaped member 700 is preferably bonded to the electrode assembly 20 from the viewpoint of further enhancing adhesion between the outer package film 50 and the electrode assembly 20. In the electrode assembly 20, the position where the strip-shaped member 700 is wound can be arbitrarily selected. In the example illustrated in Fig. 25, the strip-shaped member 700 is wound substantially at the center of the electrode assembly 20 in the FB direction. Note that in this modification, the protrusions 60B of the lid 60 can be omitted.

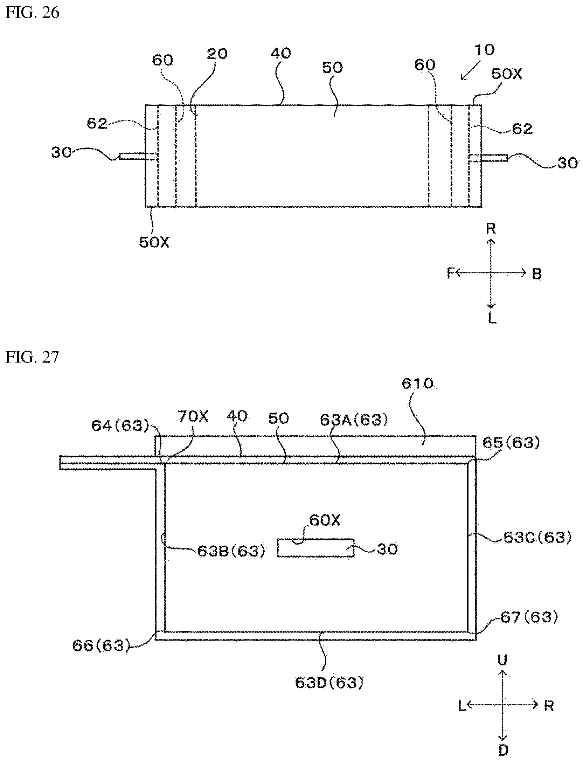

<2-4>
In the above-described embodiment, the third process (winding process) in the method for manufacturing the electrical storage device 10 can be arbitrarily changed. For example, the size of the outer package film 50 used in the third process is a size with which the outer package film 50 does not stick out from the sealing surface 63 of the lid 60 in the FB direction in the above-described embodiment. However, the outer package film 50 may have excess parts 50X sticking out from the sealing surface 63 of the lid 60 as illustrated in Fig. 26. The excess parts 50X are preferably cut, or folded in an arbitrary direction, in an arbitrary process carried out later than the winding process.

<2-5>
In the above-described embodiment, the fifth process (sealing process) in the method for manufacturing the electrical storage device 10 can be arbitrarily selected. For example, adjacent sealing surfaces of the lids 60 are preferably bonded in order from the viewpoint of enhancing sealability at the boundaries 64 to 67 of the lids 60 in the fifth process. In the case where the sealing bar 610 of the heat sealing device is used as illustrated in Fig. 27, for example, the bonding to the outer package film 50 is preferably performed in the order of the first sealing surface 63A, the third sealing surface 63C, the fourth sealing surface 63D, and the second sealing surface 63B, for example. In another example, the bonding to the outer package film 50 may be performed in the order of the second sealing surface 63B, the fourth sealing surface 63D, the third sealing surface 63C, and the first sealing surface 63A. The first sealing surface 63A and the fourth sealing surface 63D may be heat-sealed before the second sealing surface 63B and the third sealing surface 63C of the lids 60.

In the fifth process (sealing process), the second seal portion 80 may be formed by a heat sealing device. In this modification, the amount of pressing of the sealing bar 610 of the heat sealing device against the outer package film 50 and the lids 60 is preferably controlled. In a case where the pressure of the sealing bar 610 is controlled, the heat-sealable resin layer 53 of the outer package film 50 may be excessively melted, and resin lump may be formed between the sealing surfaces 63 of the lids 60 and the outer package film 50. The resin lump may cause cracking in the outer packaging 40. Therefore, the amount of pressing the sealing bar 610 is preferably controlled to the amount of pressing to such an extent that the heat-sealable resin layer 53 is not excessively melted. The amount of pressing the sealing bar 610 is the distance by which the sealing bar 610 approaches the lids 60 from a reference position on the assumption that the position where the sealing bar 610 comes into contact with the surface of the outer package film 50 is the reference position. The amount of pressing is preferably about half the thickness of the heat-sealable resin layer 53, for example.

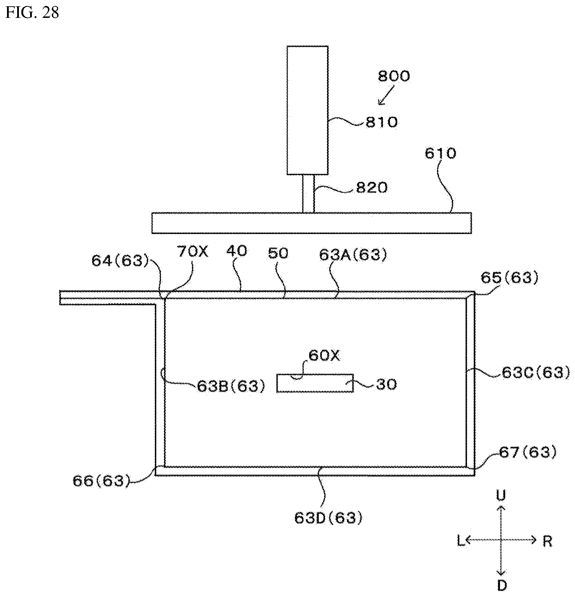

The amount of pressing the sealing bar 610 can be controlled by an electric cylinder 800 coupled to the sealing bar 610 illustrated in Fig. 28, for example. A known electric cylinder can be used as the electric cylinder 800. The electric cylinder 800 includes a body 810 including a motor and the like and a rod 820, the amount of protrusion of which changes with respect to the body 810. The sealing bar 610 is fixed to the tip of the rod 820.

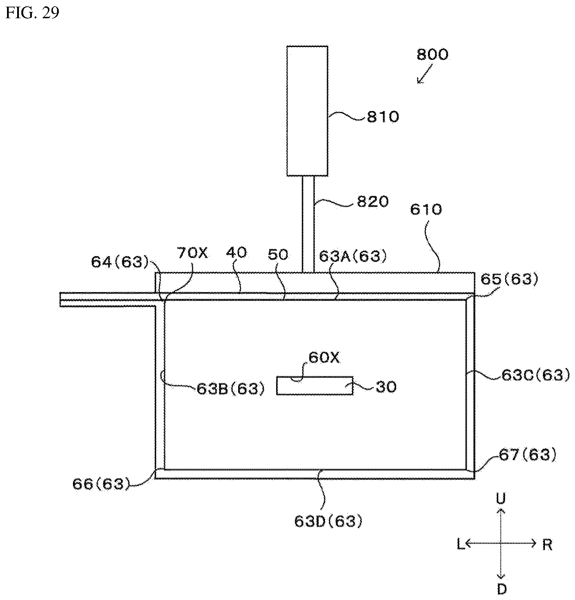

Fig. 28 is a diagram illustrating an initial position of the sealing bar 610. Fig. 29 is a diagram illustrating the reference position of the sealing bar 610. As illustrated in Fig. 28, the sealing bar 610 is separated from the outer package film 50 and the lids 60 at the initial position of the sealing bar 610. At the initial position, the sealing bar 610 approaches the outer package film 50 and the lids 60 and is located at the reference position illustrated in Fig. 29 by the amount of protrusion of the rod 820 with respect to the body 810 increasing. Note that the amount of pressing of the sealing bar 610 may be controlled by an air cylinder coupled to the sealing bar 610 instead of the electric cylinder 800. In a case where the air cylinder is used instead of the electric cylinder 800, a restriction member that buffers the sealing bar 610 at the position of a preset amount of pressing is preferably disposed around the intermediate body in order to suppress pressing of the sealing bar 610 over the preset amount of pressing.

In addition, the second seal portion 80 is preferably formed in a short period of time that is as short as possible from the viewpoint of suppressing formation of resin lump. Therefore, the lids 60 are preferably preheated in an arbitrary process carried out earlier than the fifth process in the above-described embodiment. It is possible to form the second seal portion 80 in a short period of time even in a case where a melting point of the material constituting the lids 60 is equal to or greater than a melting point of the material constituting the heat-sealable resin layer 53 of the outer package film 50, for example, by heating the lids 60 in advance. Note that the first sealing surface 63A, the second sealing surface 63B, the third sealing surface 63C, and the fourth sealing surface 63D may be heated at the same time or may be heated in an arbitrary order in accordance with the method for forming the second seal portion 80. The lids 60 can be heated by any means such as a heater bar, an ultrasonic wave, or an infrared lamp, for example.

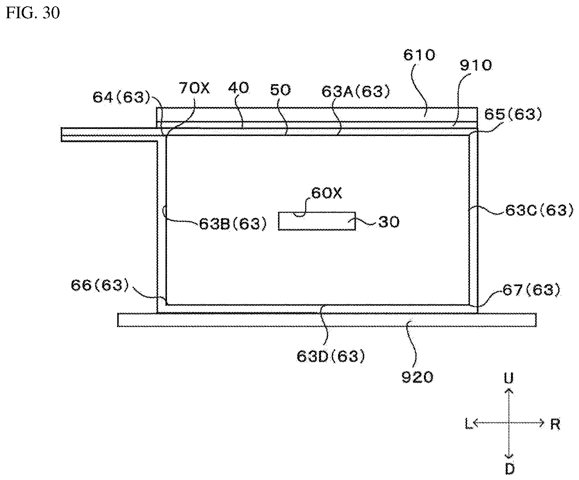

The surfaces of the sealing surfaces 63 of the lids 60 may be formed with minute unevenness, for example. Therefore, there is a concern that sealing strength may vary depending on parts in the second seal portion 80 in a case where the second seal portion 80 is formed by the heat sealing device. Furthermore, there is a concern that the size of resin lump formed between the outer package film 50 and the lids 60 may vary. The second seal portion 80 is preferably formed in the state where an elastic body 910 with heat resistance is sandwiched between the sealing bar 610 and the outer package film 50 as illustrated in Fig. 30 in the case where the heat sealing device is used in the fifth process from the viewpoint of reducing such variations in sealing strength and variations in size of resin lump. The material constituting the elastic body 910 is an elastic body having a melting point equal to or greater than the temperature according to the heat sealing conditions. The material constituting the elastic body 910 is, for example, a rubber sheet, a silicon sheet, a urethane sheet, or a fluororesin sheet.

Similarly, the second seal portion 80 is preferably formed in a state where at least the lids 60 are disposed on the elastic body 920 in the case where the heat sealing device is used in the fifth process from the viewpoint of reducing variations in sealing strength of the second seal portion 80. The electrode assembly 20 may be disposed on the elastic body 920. As the material constituting the elastic body 920, sponge can also be used as well as the materials exemplified as the materials constituting the elastic body 910. Note that in the example illustrated in Fig. 30, the elastic body 910 or the elastic body 920 can be omitted.

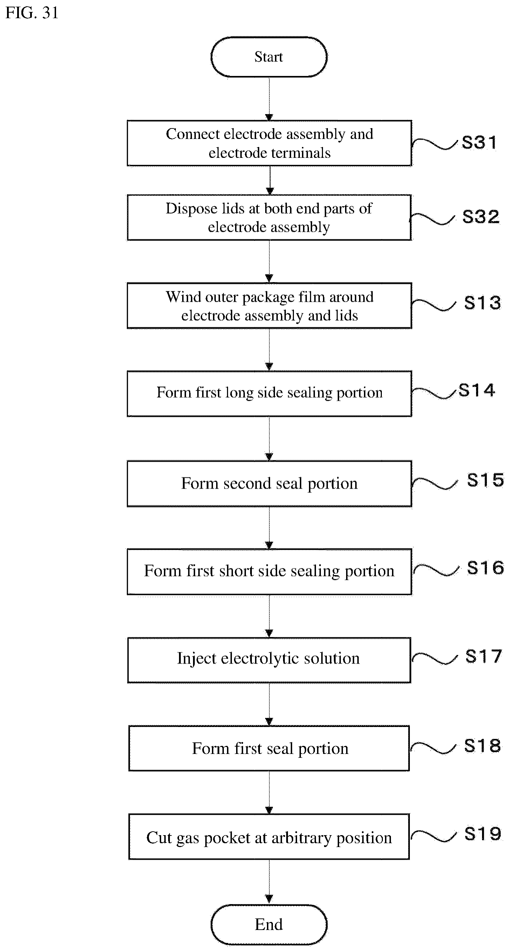

<2-6>
In the above-described embodiment, the first process and the second process in the method for manufacturing the electrical storage device 10 can be arbitrarily changed. Fig. 31 is a flowchart illustrating a modification of the method for manufacturing the electrical storage device 10. The modification of the method for manufacturing the electrical storage device 10 includes a thirty first process and a thirty second process.

In the thirty first process (connecting process) in Step S31, the manufacturing apparatus connects the electrode assembly 20 and the electrode terminals 30.

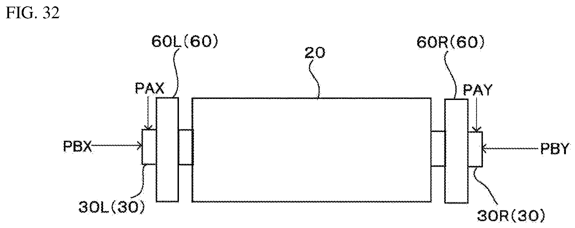

The thirty second process (disposition process) in Step S32 is carried out after the thirty first process. In the thirty second process, the manufacturing apparatus disposes the lids 60 at both end parts of the electrode assembly 20. Fig. 32 is a diagram related to the thirty second process. Hereinafter, the electrode terminal 30 and the lid 60 disposed on one side with respect to the electrode assembly 20 will be referred to as an electrode terminal 30L and a lid 60L, respectively. The electrode terminal 30 and the lid 60 disposed on the other side with respect to the electrode assembly 20 will be referred to as an electrode terminal 30R and a lid 60R, respectively.

The manufacturing apparatus positions the one lid 60L with respect to the one electrode terminal 30L by an image processing device (not illustrated). As illustrated in Fig. 31, the positioning of the one lid 60L with respect to the one electrode terminal 30L is performed with reference to the long side PAX and the short side PBX of the one electrode terminal 30L in plan view, for example, in the disposition process. The image processing device detects the short side PBX through a transmission inspection and calculates the amount of correction from the reference side on the opposite side from the position information. Next, the manufacturing apparatus positions the other lid 60R with respect to the other electrode terminal 30R with reference to the long side PAX and the short side PBX of the one electrode terminal 30L.

In the positioning of the other lid 60R, the positioning of the other lid 60R with respect to the other electrode terminal 30R may be performed with reference to the long side PAY and the short side PBY of the other electrode terminal 30R in plan view. Note that in the third process (winding process), the positioning of the outer package film 50 with respect to the intermediate body may be performed on the basis of the long side PAX and the short side PBX or the long side PAY and the short side PBY set in the disposition process.

<2-7>
In the above-described embodiment, recessed portions recessed from the second surface 62 toward the first surface 61 may be formed in addition to or instead of the protrusions 60B in the lids 60. The lids 60 are fixed by the protrusions of the fixing jig 100 being inserted into the recessed portions.

<2-8>
In the above-described embodiment, at least either protrusions protruding from the first surface 61 or recessed portion recessed from the first surface 61 toward the second surface 62 may be formed in the lids 60. The electrode assembly 20 is fixed by at least either the protrusions or the recessed portions formed in the first surface 61. Also, the shape of the electrode assembly 20 is held by at least either the protrusions or the recessed portions formed in the first surface 61.

<2-9>
In the above-described embodiment, the outer package film 50 of the electrical storage device 10 may bulge further outward than the lids 60 in the FB direction. The parts of the outer package films 50 bulging as compared with the lids 60 may be folded like a gable top pouch or a brick-shaped pouch.

### Reference Signs List

10 Electrical storage device
20 Electrode assembly
30 Electrode terminal
40 Outer packaging
40A Opening part
50 Outer package film
60, 260, 360, 460 Lid
60B, 360B, 460B Protrusion
260X Through-hole
261 Thick portion
460X Fracture portion
61 First surface
62 Second surface
100 Fixing jig
110, 510 Lid fixing portion
200 Transport jig
211 Plate
211A Handle
212 Plate
213 Coupling portion
700 Strip-shaped member
910 Elastic body
920 Elastic body

## Claims

1. An electrical storage device comprising:
an electrode assembly; and
an outer packaging that seals the electrode assembly,
wherein
the outer packaging includes
an outer package film that wraps the electrode assembly to form an opening part, and
a lid that is disposed at the opening part, and
the lid includes
a first surface that faces the electrode assembly,
a second surface on a side opposite to the first surface, and
at least either a protrusion that protrudes from the second surface or a recessed portion that is recessed from the second surface toward the first surface.

2. The electrical storage device according to claim 1, wherein
the lid includes a body that includes the first surface and the second surface, and
the protrusion includes a fixing member that is bonded to the body.

3. The electrical storage device according to claim 1, wherein
the lid includes a body that includes the first surface and the second surface,
the body includes a thick portion that protrudes from the second surface, and
holes are formed in the thick portion and the body.

4. The electrical storage device according to claim 1, wherein the protrusion includes a fracture portion.

5. A fixing jig that is used when the electrical storage device according to any one of claims 1 to 4 is manufactured or used, the fixing jig comprising a lid fixing portion that is fixed to at least one of the protrusion and the recessed portion.

6. A lid that is used for the electrical storage device according to any one of claims 1 to 4, the lid comprising:
a first surface;
a second surface on a side opposite to the first surface; and
at least one of a protrusion that protrudes from the second surface and a recessed portion that is recessed from the second surface toward the first surface.

7. A method for manufacturing an electrical storage device including
an electrode assembly, and
an outer packaging that seals the electrode assembly,
the outer packaging including
an outer package film that wraps the electrode assembly to form an opening part, and
a lid that closes the opening part,
the lid including
a first surface that faces the electrode assembly,
a second surface on a side opposite to the first surface, and
at least one of a protrusion that protrudes from the second surface and a recessed portion that is recessed from the second surface toward the first surface,
the method for manufacturing the electrical storage device comprising fixing a position of the lid with respect to the electrode assembly by fixing a jig to at least one of the protrusion and the recessed portion of the lid disposed on a lateral side of the electrode assembly.

8. A transport jig for an electrode assembly comprising:
at least a pair of plates that sandwiches the electrode assembly; and
a coupling portion that couples the pair of plates.

9. The transport jig according to claim 8, further comprising a handle that is attached to at least one of the pair of plates.
